# EUROPEAN PATENT APPLICATION

(11) **EP 1 675 316 A1**
(43) Date of publication of application: **28.06.2006**
(21) Application number: 04293118.8
(22) Date of filing: 23.12.2004
(51) Int. Cl.: H04L 12/56, H04Q 7/30

(54) **Base station available capacity notification in a HSDPA system**

(71) Applicant: Evolium S.A.S., 75008 Paris (FR)
(72) Inventor: Keil, Klaus, 73730 Esslingen (DE); Bakker, Hajo, 71735 Eberdingen (DE)
(74) Representative: Schäfer, Wolfgang

(57) **Abstract**

The present invention relates to a method of operating a base station (10) of a wireless communications network, wherein data is transmitted between said base station (10) and a radio network controller (20).

The inventive method is characterized in that said base station (10) automatically issues a first capacity allocation message (CAM_1) to the radio network controller (20) which comprises capacity information on a basic data transfer capacity currently supported by the base station (10).

The present invention further relates to a base station (10) and a radio network controller (20) of a wireless communications network.

## Description

The present invention relates to a method of operating a base station of a wireless communications network, wherein data is transmitted between said base station and a radio network controller.

The present invention further relates to a base station of a wireless communications network, wherein data is transmitted between said base station and a radio network controller. The present invention also relates to a radio network controller of a wireless communications network.

Contemporary wireless communications networks such as the Universal Mobile Telecommunications System (UMTS) inter alia provide for packet data transmission by using the Transmission Control Protocol (TCP). A slow start mechanism of TCP, which is e.g. described by the documents "TCP Slow Start, Congestion Avoidance, Fast Retransmit, and Fast Recovery Algorithms", IETF RFC 2001 (Internet Engineering Task Force, Request for Comments, cf. http://www.ietf.org) and "TCP Congestion Control", IETF RFC 2581, is provided to slowly probe the communications network in order to determine an available transmission capacity.

Said slow start is basically performed by issuing a single data packet at a source network element and by evaluating a respective round trip delay after receiving a corresponding acknowledge message issued by a destination network element. Especially within wireless communication networks, wherein at least most of the destination network elements usually are mobile terminals, the round trip delay may reach comparatively high values. This is highly undesirable since it impairs the slow start mechanism or rather a transition from the slow start to an ordinary operational state of TCP.

The aforementioned round trip delay is also affected, i.e. further increased, by frame protocols used for transmitting data between e.g. a radio network controller (RNC) and a base station (Node B) of a UMTS communications network via an Iub interface.

Therefore, it is an object of the present invention to provide an improved method of operating a base station and an improved base station as well as an improved radio network controller, which enable to achieve decreased round trip delays, particularly in order to speed up a TCP slow start mechanism.

According to the present invention, this object is solved for a method of operating a base station of a wireless communications network of the aforementioned type in that said base station automatically issues a first capacity allocation message to the radio network controller which comprises capacity information on a basic data transfer capacity currently supported by the base station.

This first capacity allocation message enables the radio network controller to immediately forward data, which may e.g. be constituted by TCP packet data received from a core network or a source network element, respectively, to the base station. Since said first capacity allocation message comprises capacity information on a basic data transfer capacity currently supported by the base station, the radio network controller - after receiving TCP packet data to be forwarded to said base station - is not required to preliminarily determine the data transfer capacity of the base station e.g. by exchanging further control messages with the base station.

For data transmissions involving the TCP slow start mechanism, this results in a reduction of the round trip delay and thus accelerates a transition from the TCP slow start to regular TCP operation.

According to a very advantageous embodiment of the present invention, data transmission, in particular between the radio network controller and the base station, is performed according to a high speed downlink packet access (HSDPA) mode.

Within said HSDPA mode, TCP packets are transmitted from the radio network controller (RNC) to the base station (Node B) of a UMTS communications network via an Iub interface by means of MAC-d protocol data units (PDUs). Furthermore, a frame protocol is employed that controls communication between the radio network controller and the base station, and said MAC-d PDUs are transferred within a HS-DSCH (High Speed Downlink Shared Channel) data frame.

The frame protocol is described in: 3GPP TS 25.435, "UTRAN Iub Interface User Plane Protocols for Common Transport Channel data streams".

According to HSDPA operation as known from prior art, upon receiving a TCP packet that is to be forwarded to said base station, the radio network controller firstly issues a HS-DSCH Capacity Request control message which indicates the amount of data to be transmitted to the base station. Said amount of data may e.g. be derived from the size of a user buffer within the radio network controller.

Upon receiving the prior art HS-DSCH Capacity Request control message from the radio network controller, the base station responds to said HS-DSCH Capacity Request control message with a HS-DSCH Capacity Allocation control message that defines the amount of data, i.e. the number and the size of MAC-d PDUs, the radio network controller is allowed to send within a defined time period.

Consequently, according to prior art, a granting procedure comprising an exchange of said HS-DSCH Capacity Request control message and said HS-DSCH Capacity Allocation control message is performed, which increases a round trip delay of a TCP packet involved in said data transmission from the radio network controller to the base station.

According to the present invention, the base station automatically issues a first capacity allocation message which enables the radio network controller to immediately initiate a data transmission to the base station thus avoiding the prior art HS-DSCH Capacity Request control message and consequently decreasing a round trip delay.

Thus, advantageously the time for generating, transferring and evaluating said HS-DSCH Capacity Request control message is saved by the present invention.

As a further advantage of the inventive method, the generation of the HS-DSCH Capacity Allocation control message, which is provided by the inventive method in form of the first capacity allocation message, does not adversely affect the round trip delay, either, because the first capacity allocation message is advantageously generated, transferred and evaluated prior to any TCP packet data arriving at the radio network controller e.g. in the context of a TCP slow start.

In the context of the present invention, the term "automatically" denotes that the base station does not wait for any incoming Capacity Request message such as e.g. the aforedescribed HS-DSCH Capacity Request control message from the radio network controller for issueing the inventive first capacity allocation message. The inventive first capacity allocation message is preferably issued on a setup or a reconfiguration of a user connection, i.e. a TCP connection, and/or on the end of a TCP packet transmission across the Iub interface, which may e.g. be detected by said base station when receiving a HS-DSCH data frame indicating an empty user buffer within the radio network controller.

It is also possible that the base station issues said inventive first capacity allocation message at an arbitrary point of time regardless any state of a communication with the radio network controller or further network elements.

The base station may also issue said inventive first capacity allocation message periodically to ensure that the radio network controller is supplied with proper values of the base station's current transmission capacity. In this case, a period duration between two inventive capacity allocation messages is preferably chosen to be larger than a duration of a TCP packet transmission across the Iub interface.

According to a very advantageous embodiment of the inventive method, the base station issues said first capacity allocation message to the radio network controller prior to receiving a capacity request message from the radio network controller.

Another advantageous embodiment of the inventive method provides that one or more further capacity allocation messages are issued by the base station, preferably during a data transmission with the radio network controller. Said further capacity allocation messages allow an adaptation of transmission parameters and increase a flexibility of the data transmission between the radio network controller and the base station. Said further capacity allocation messages may also be issued automatically in the sense of the present invention.

Yet another advantageous embodiment of the method according to the present invention is characterized in that said capacity information comprised within said further capacity allocation messages is altered by the base station depending on capacity requests of said radio network controller and/or on the data transfer capacity currently supported by the base station.

According to a further advantageous embodiment of the present invention, said base station issues a further capacity allocation message to the radio network controller if the radio network controller indicates to the base station an empty user buffer.

The indication of an empty user buffer from the radio network controller to the base station may e.g. be contained within a HS-DSCH data frame that is used to transport MAC-d PDUs. Alternatively, said indication of an empty user buffer may also be effected by a special control message such as a Capacity Request message.

A further solution to the object of the present invention is given by a base station of a wireless communications network according to claim 7, wherein data is transmitted between said base station and a radio network controller. Said base station is characterized by being configured to automatically issue a first capacity allocation message to the radio network controller, said first capacity allocation message comprising information on a basic data transfer capacity currently supported by the base station.

Advantageously, the inventive base station is capable of performing the inventive method according to one of the claims 1 to 6.

Yet another solution to the object of the present invention is given by a radio network controller of a wireless communications network, wherein data is transmitted between said radio network controller and a base station. The inventive radio network controller is configured to receive a first capacity allocation message by said base station prior to issuing a capacity request message to said base station.

A further advantageous embodiment of the inventive radio network controller is characterized by being configured to immediately initiate a data transmission to said base station upon receiving data, in particular upon receiving packet data that is to be forwarded by said radio network controller to said base station.

Another advantageous embodiment of the present invention is characterized in that said radio network controller is configured to perform said data transmission according to said first capacity allocation message.

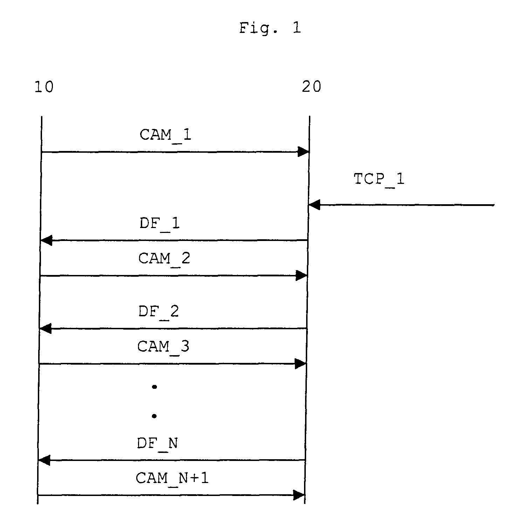

Further applications, features and advantages of the present invention are described in the following detailed description with reference to the drawing, in which Fig. 1 shows a diagram depicting a signal flow of a first embodiment of the present invention.

A base station 10 and a radio network controller 20 of a UMTS wireless communications network are symbolized in Fig. 1 by vertical lines and provide for packet data transmission by means of the Transmission Control Protocol (TCP).

Data transmissions between the radio network controller 20 and the base station 10 are performed according to a high speed downlink packet access mode (HSDPA), wherein TCP packet data is transported from said radio network controller 20 to said base station 10 by means of MAC-d protocol data units (PDUs) which are contained in HS-DSCH data frames DF_1, DF_2, ....

As can be gathered from Fig. 1, the base station 10 automatically issues a first capacity allocation message CAM_1 to the radio network controller 20. In this context, "automatically" means that the base station 10 does not wait for any incoming control message or event or the like for triggering the inventive first capacity allocation message CAM. The base station 10 may rather issue said inventive first capacity allocation message CAM_1 at an arbitrary point of time regardless any state of a communication with the radio network controller 20 or further network elements. For instance, the base station may also issue said inventive first capacity allocation message CAM_1 periodically.

Correspondingly, the inventive radio network controller 20 receives the first capacity allocation message CAM_1 which comprises capacity information on a basic transfer capacity that is currently supported by the base station 10. Thus the radio network controller 20 is automatically informed about the current transmission capacity of the base station 10. The capacity information may e.g. be given in form of an amount of data, i.e. the number and the size of MAC-d PDUs, the radio network controller 20 is allowed to send to the base station 10 within a defined time period.

With this information, the radio network controller 20 may immediately initiate a data transmission to said base station 10 without being required to issue a HS-DSCH Capacity Request control message beforehand as is required by prior art systems, because the inventive radio network controller 20 has already - automatically - been notified on the base station's current transmission capacity by means of the inventive first capacity allocation message CAM_1.

A corresponding situation is depicted in Fig. 1. The arrow TCP_1 symbolizes incoming TCP packet data that is to be forwarded by the radio network controller 20 to the base station 10.

Upon receiving said TCP packet data TCP_1, the radio network controller 20 immediately transfers a first HS-DSCH data frame D_1 to the base station 10 according to the capacity information received beforehand via the first capacity allocation message CAM_1.

After that, the base station 10 responds by issuing a second capacity allocation message CAM_2 which contains capacity information on a transfer capacity currently supported by said base station 10.

The capacity information of the second capacity allocation message CAM_2 may be different from the capacity information forwarded to the radio network controller 20 by means of the first capacity allocation message CAM_1 and it may e.g. be altered by the base station 10 e.g. depending on a current load situation of the base station 10 and/or on capacity requests from said radio network controller 20 or the like.

After receiving the second capacity allocation message CAM_2 from the base station 10, the radio network controller 20 transmits further data frames DF2, ...., DF_N to the base station 10, which in turn responds with a corresponding capacity allocation message CAM_3, ...., CAM_N+1, until all of the TCP packet data TCP_1 has been transmitted to the base station 10.

By using the inventive first capacity allocation message CAM_1 that is automatically issued by said base station 10, a round trip delay for TCP packet data can be decreased because with the inventive method, avoiding the prior art HS-DSCH Capacity Request control message is possible. Said decrease of a round trip delay is particularly useful for accelerating a TCP slow start procedure.

Thus, advantageously the time for generating, transferring and evaluating said HS-DSCH Capacity Request control message is saved by the present invention.

Furthermore, the generation of the inventive first capacity allocation message CAM_1, that substitutes the ordinary prior art HS-DSCH Capacity Allocation control message which is only issued upon receiving a HS-DSCH Capacity Request control message, does not adversely affect the round trip delay of slow start TCP packet data or other TCP packet data, either, because the inventive first capacity allocation message CAM_1 is advantageously generated, transferred and evaluated prior to any TCP packet data TCP_1 (Fig. 1) arriving at the radio network controller 20 in the context of a TCP slow start.

The further capacity allocation messages CAM_2, CAM_3, .... may be issued by the base station 10 in response to e.g. the data frames DF_1, DF_2, ...., but they may also be issued periodically or even in a (pseudo-)random fashion or simply whenever significant changes regarding the transfer capacity of the base station 10 have occurred. I.e., said further capacity allocation messages CAM_2, CAM_3, .... may also be issued automatically in the sense of the present invention.

Generally, the inventive method may be applied upon setup of a new connection but also upon an interruption of a current TCP session. E.g., after having transferred the contents of a web page, a size of a user buffer maintained within the radio network controller 20 may be zero thus indicating an interruption of the current TCP session. Instead of waiting for new TCP packet data and, in consequence, a HS-DSHC Capacity Request control message from the radio network controller 20, the base station 10 may again - automatically - issue a "new" first capacity allocation message that notifies the radio network controller 20 of a basic transmission capacity currently supported by the base station 10 that may be used for transmitting a next web page or the like.

Correspondingly, e.g. after receiving a first data frame of said next web page, further capacity allocation messages may be issued by the base station 10 in the already aforedescribed manner.

It is also possible that said base station 10 issues a further capacity allocation message CAM_2, CAM_3, .... to the radio network controller 20 if the radio network controller 20 indicates to the base station 10 an empty user buffer. The indication of an empty user buffer from the radio network controller 20 to the base station 10 may e.g. be contained within a HS-DSCH data frame that is used to transport MAC-d PDUs. Alternatively, said indication of an empty user buffer may also be effected by a special control message such as a Capacity Request message.

## Claims

1. Method of operating a base station (10) of a wireless communications network, wherein data is transmitted between said base station (10) and a radio network controller (20), **characterized in that** said base station (10) automatically issues a first capacity allocation message (CAM_1) to the radio network controller (20) which comprises capacity information on a basic data transfer capacity currently supported by the base station (10).

2. Method according to claim 1, wherein a data transmission is performed according to a high speed downlink packet access (HSDPA) mode.

3. Method according to claim 1 or 2, **characterized in that** said base station (10) issues said first capacity allocation message (CAM_1) to the radio network controller (20) prior to receiving a capacity request message from the radio network controller (20).

4. Method according to one of the preceding claims, **characterized in that** one or more further capacity allocation messages (CAM_2, CAM_3, ....) are issued by the base station (10), preferably during a data transmission with the radio network controller (20).

5. Method according to claim 4, **characterized in that** said capacity information comprised within said further capacity allocation messages (CAM_2, CAM_3, ....) is altered by the base station (10) depending on capacity requests of said radio network controller (20) and/or on the data transfer capacity currently supported by the base station (10).

6. Method according to one of the claims 4 to 5, **characterized in that** said base station (10) issues a further capacity allocation message (CAM_2, CAM_3, ....) to the radio network controller (20) if the radio network controller (20) indicates to the base station (10) an empty user buffer.

7. Base station (10) of a wireless communications network, wherein data is transmitted between said base station (10) and a radio network controller (20), **characterized by** being configured to automatically issue a first capacity allocation message (CAM_1) to the radio network controller (20), said first capacity allocation message (CAM_1) comprising information on a basic data transfer capacity currently supported by the base station (10).

8. Base station (10) according to claim 7, **characterized by** being capable of performing the method according to one of the claims 1 to 6.

9. Radio network controller (20) of a wireless communications network, wherein data is transmitted between said radio network controller (20) and a base station (10), **characterized in that** said radio network controller (20) is configured to receive a first capacity allocation message (CAM_1) by said base station (10) prior to issuing a capacity request message to said base station (10).

10. Radio network controller (20) according to claim 9, **characterized by** being configured to immediately initiate a data transmission to said base station (10) upon receiving data, in particular upon receiving packet data that is to be forwarded by said radio network controller (20) to said base station (10).

11. Radio network controller (20) according to claim 10 which is configured to perform said data transmission according to said first capacity allocation message (CAM_1).
